# EUROPÄISCHE PATENTSCHRIFT

(11) **EP 2 107 963 B1**
(45) Veröffentlichungstag und Bekanntmachung des Hinweises auf die Patenterteilung: **16.05.2012**
(21) Anmeldenummer: 07857509.9
(22) Anmeldetag: 13.12.2007
(51) Int. Cl.: B29C 49/48, F16L 41/02, F16L 41/03, F16L 47/32, B29C 49/50

(54) **Verfahren und Vorrichtung zum Herstellen eines Rohrs und nach dem Verfahren hergestelltes Rohr und Verwendung des Rohres**
Method and device for producing a pipe and pipe produced according to said method and use of the pipe
Procédé et dispositif de fabrication d'un tube, le tube et la utilisation du tube

(30) Priorität: 18.12.2006 DE 102006060144
(43) Veröffentlichungstag der Anmeldung: 14.10.2009
(73) Patentinhaber: MAHLE International GmbH, 70376 Stuttgart (DE)
(72) Erfinder: ZIRKELBACH, Thomas, 71732 Tamm (DE)
(74) Vertreter: BRP Renaud & Partner
(86) Internationale Anmeldenummer: PCT/EP2007/063860
(87) Internationale Veröffentlichungsnummer: WO 2008/074720

(56) Entgegenhaltungen:
- WO-A-93/23666
- DE-B1- 1 454 947
- DATABASE WPI Week 198433 Derwent Publications Ltd., London, GB; AN 1984-204957 XP002482471 -& JP 59 118435 A (TOYO KOGYO CO) 9. Juli 1984 (1984-07-09)
- DATABASE WPI Week 199940 Derwent Publications Ltd., London, GB; AN 1999-471661 XP002482472 -& JP 02 939905 B1 (ARAKI KANAGATA SEISAKUSHO KK) 25. August 1999 (1999-08-25)

## Beschreibung

Die vorliegende Erfindung betrifft ein Verfahren sowie eine Vorrichtung zum Herstellen eines Rohrs, das in seiner Wandung zwischen seinen Enden wenigstens einen, die Wandung durchdringenden Kanal aufweist. Die Erfindung betrifft außerdem ein derartiges Rohr.

JP 35 911 8435 zeigt die Herstellung von einem Rohr. Aus der DE 34 31 078 A1 ist eine Einrichtung zur Dämpfung des Einlassgeräuschs einer Brennkraftmaschine bekannt, die in einer Frischgasanlage zur Versorgung der Brennkraftmaschine mit Frischgas angeordnet ist. Zur Erzielung einer Dämpfungswirkung können Rohre verwendet werden, die in ihrer Wandung zwischen ihren Längsenden einen oder mehrere, die Wandung durchdringende Kanäle oder Durchgangsöffnungen aufweisen. Für die Serienfertigung derartiger Rohre ist es erwünscht, diese Rohre möglichst preiswert herzustellen. Ein nachträgliches Anbringen der Öffnungen bzw. der Kanäle ist extrem aufwändig. Auch ein Spritzgussverfahren, bei dem der wenigstens eine Kanal bereits in einem Spritzgusswerkzeug vorbereitet ist, ist nur vergleichsweise aufwändig realisierbar. Im Unterschied dazu lassen sich Blasformverfahren vergleichsweise preiswert realisieren. Allerdings lassen sich im Blasformverfahren nur solche Werkstücke herstellen, die eine umfangsmäßig geschlossene Kontur besitzen, da beim Blasformen der Rohling aufgeblasen wird, also im Inneren mit einem Überdruck beaufschlagt wird. Das Herstellen von Werkstücken mit umfänglichen Unterbrechungen, wie z.B. Durchgangsöffnungen und Kanäle, lassen sich mit einem konventionellen Blasformverfahren daher nicht herstellen.

Die vorliegende Erfindung beschäftigt sich mit dem Problem, für die Herstellung eines Rohrs der eingangs genannten Art Möglichkeiten für eine preiswerte Herstellung anzugeben.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, für die Herstellung eines derartigen Rohrs ein Blasformverfahren zu verwenden und diesem ein Quetschformverfahren nachzuschalten, das bei noch nicht erstarrtem Blasformkörper und vorzugsweise bei noch anliegendem Blasformdruck durchgeführt wird. Desweiteren wird dem Quetschformverfahren ein Schneidverfahren nachgeschaltet, das dann bei erstarrtem Blasformkörper durchgeführt wird. Die vorgeschlagene Vorgehensweise baut somit auf dem vergleichsweise preiswerten Blasformverfahren auf und ermöglicht es, das mit den Kanälen versehene Rohr vergleichsweise preiswert herzustellen. Gleichzeitig besitzt das Rohr in seinem Inneren eine qualitativ hochwertige Oberfläche, was die Verwendung des Rohrs begünstigt, wenn es auf niedrige Strömungswiderstände ankommt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Längsschnitt durch ein Rohr,
- Fig. 2: eine Seitenansicht auf das Rohr, jedoch bei einer anderen Ausführungsform,
- Fig. 3: eine weitere Seitenansicht auf das Rohr im Bereich wenigstens eines Kanals,

- Fig. 4: eine Ansicht wie in Fig. 3, jedoch bei einer anderen Ausführungsform,
- Fig. 5: einen Querschnitt durch das Rohr im Bereich eines Kanals,
- Fig. 6: einen Querschnitt durch das Rohr in einem Bereich außerhalb eines Kanals,
- Fig. 7: einen Querschnitt einer Vorrichtung zum Herstellen des Rohrs vor einem Blasformvorgang,
- Fig. 8: eine Ansicht wie in Fig. 7, jedoch nach dem Blasformvorgang,
- Fig. 9: eine Ansicht wie in Fig. 8, jedoch nach einem Quetschformvorgang,
- Fig. 10: eine Ansicht wie in Fig. 9, jedoch nach einem Schneidvorgang.

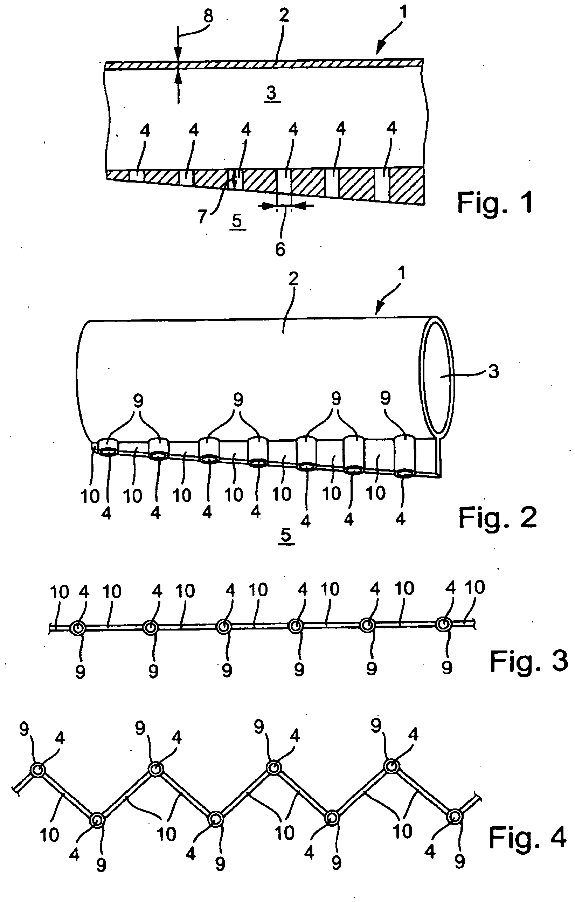

Entsprechend den Fig. 1 bis 6 weist ein Rohr 1 eine Wandung 2 auf, die ein Inneres 3 des Rohrs 1 umfangsmäßig umhüllt. Zwischen zwei nicht gezeigten Längsenden des Rohrs 1 weist die Wandung 2 zumindest einen Kanal 4 auf, der die Wandung 2 durchdringt und somit das Innere 3 des Rohrs 1 mit einem Äußeren 5 bzw. mit einer Umgebung 5 des Rohrs 1 verbindet. Im Beispiel besitzt das Rohr 1 mehrere derartige Kanäle 4. Die einzelnen Kanäle 4 können identisch sein oder sich hinsichtlich ihres Kanalquerschnitts 6 und/oder hinsichtlich ihrer Kanallänge 7 voneinander unterscheiden. Im Extremfall entspricht die Kanallänge 7 im wesentlichen einer Wandstärke 8 der Wandung 2. In diesem Extremfall ist der jeweilige Kanal 4 durch eine Durchgangsöffnung in der Wandung 2 gebildet.

Bedingt durch das weiter unten näher beschriebene Herstellungsverfahren sind die einzelnen Kanäle 4, die sich vorzugsweise radial bzw. quer zur Längsrichtung des Rohrs 1 erstrecken, von zylindrischen Hülsenkörpern 9 eingefasst. Benachbarte Hülsenkörper 9 sind jeweils durch einen Steg 10 miteinander verbunden. Das Rohr 1 ist blasgeformt, so dass es einschließlich der Hülsenkörper 9 und einschließlich der Stege 10 aus einem Stück hergestellt ist. Die Kanäle 4 sind vorzugsweise in der Rohrlängsrichtung hintereinander angeordnet. Dabei ist es gemäß Fig. 3 möglich, die einzelnen Kanälen im wesentlichen geradlinig hintereinander anzuordnen oder gemäß Fig. 4 im wesentlichen zick-zack-förmig hintereinander anzuordnen.

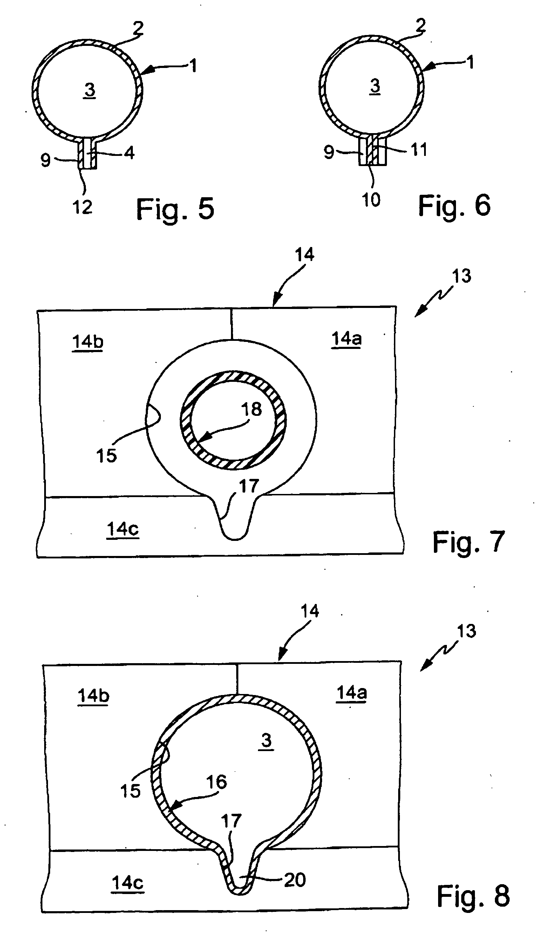

Fig. 5 zeigt einen Querschnitt des Rohrs 1 im Bereich eines Kanals 4. Im Unterschied dazu ist das Rohr 1 in Fig. 6 im Bereich eines Stegs 10, also zwischen zwei aufeinander folgenden Kanälen 4 geschnitten. Eine mit 11 bezeichnete Grenzlinie deutet einen Bereich an, in dem während der nachfolgend noch näher erläuterten Herstellung des Rohrs 1 ursprünglich getrennte Wandabschnitt gegeneinander gepresst bzw. gequetscht worden sind. Dieser Quetschbereich kann am fertigen Rohr 1 im Rahmen entsprechender Gefügeuntersuchungen nachweisbar sein. Desweiteren ist an dem vom Inneren 3 entfernten Kanalende eine Schnittkante 12 ausgebildet, die im Rahmen entsprechender Untersuchungen nachweisbar sein kann. Das Rohr 1 ist durch Blasformen aus Kunststoff hergestellt. Das Blasformen des Rohrs 1, das Quetschen und Beschneiden des Rohrs 1 im Bereich des jeweiligen Kanals 4 können durch entsprechende Untersuchungen am fertigen Rohr 1 nachweisbar sein.

Mit Bezug auf die Fig. 7 bis 10 wird im Folgenden ein bevorzugtes Verfahren zum Herstellen des Rohrs 1 näher erläutert.

Das Herstellungsverfahren baut grundsätzlich auf einem Blasformverfahren auf. Dementsprechend umfasst eine Vorrichtung 13 zum Herstellen des Rohrs 1 ein Blasformwerkzeug 14, das beispielsweise drei Teile 14a, 14b, 14c umfasst. Das Blasformwerkzeug 14 enthält eine Kavität 15, die komplementär zu einem Rohrrohling 16 geformt ist. Für den jeweiligen, am fertigen Rohr 1 ausgebildeten Kanal 4 weist die Kavität 15 eine Ausbuchtung 17 auf. Dabei kann für jeden einzelnen Kanal 4 eine derartige Ausbuchtung 17 vorgesehen sein. Vorzugweise ist jedoch für sämtliche Kanäle 4 eine gemeinsame Ausbuchtung 17 vorgesehen. In jedem Fall besitzt die jeweilige Ausbuchtung 17 Innenabmessungen, die größer sind als die komplementären Außenabmessungen des jeweiligen fertigen Kanals 4 am fertigen Rohr 1. Beispielsweise besitzt die Ausbuchtung 17 in radialer Richtung eine größere Erstreckung als der jeweilige Kanal 4. Desweiteren kann die Ausbuchtung 17 innen einen breiteren Querschnitt aufweisen als ihn der jeweilige Kanal 4 außen, also in seinem Hülsenkörper 9 besitzt.

Entsprechend Fig. 7 wird in das Blasformwerkzeug 14 bzw. in dessen Kavität 15 ein schlauchförmiger Kunststoffkörper 18 eingebracht, der sich für den Blasformvorgang in einem nicht erstarrten, sondern eher zähflüssigen Zustand befindet. Mit dem Aufblasen des Körper 18 dehnt sich dieser aus und kommt mit seiner Wandung an der Oberfläche der Kavität 15 zur Anlage, wobei die Wandstärke des Körpers 18 entsprechend abnimmt.

Fig. 8 zeigt den bereits blasgeformten Rohrrohling 16. Erkennbar kleidet der Rohrrohling 16 die Kavität 15 vollständig aus, insbesondere ist somit auch die Ausbuchtung 17 durch den Rohrrohling 16 ausgekleidet. Für den Blasformvorgang herrscht im Inneren 3 des Körpers 18 bzw. im Rohrrohling 16 ein vorbestimmter Blasformdruck.

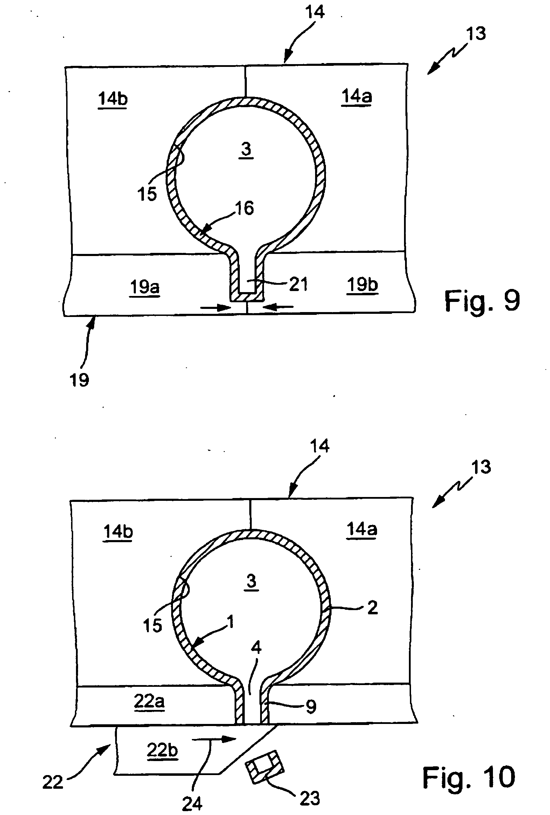

Nach dem Blasformvorgang erfolgt ein Quetschvorgang. Hierzu ist die Vorrichtung 13 entsprechend Fig. 9 mit einem Quetschformwerkzeug 19 ausgestattet, das beispielsweise aus zwei Teilen 19a und 19b besteht. Im Beispiel ersetzt das Quetschformwerkzeug 19 den dritten Teil 14c des Blasformwerkzeugs 14. Das Quetschformen kann somit vollständig oder im wesentlichen innerhalb des Blasformwerkzeugs 14 realisiert werden. Insbesondere ist es möglich, das Quetschformwerkzeug 19 in das Blasformwerkzeug 14 zu integrieren. Alternativ kann der Rohrrohling 16 nach dem Blasformen dem Blasformwerkzeug 14 entnommen werden und in ein separates Quetschformwerkzeug 19 eingelegt werden.

Bei in das Blasformwerkzeug 14 integriertem Quetschformwerkzeug 19 kann es zweckmäßig sein, das Quetschformwerkzeug 19 so auszugestalten, dass es zwischen zwei Stellungen verstellbar ist. Für den Blasformvorgang ist das Quetschformwerkzeug 19 in eine erste Stellung überführt, in der es den Blasformvorgang nicht behindert. Beispielsweise könnte das Quetschformwerkzeug 19 in dieser ersten Stellung die jeweilige Ausbuchtung 17 oder zumindest einen Bereich davon bilden. Für den Quetschformvorgang ist dann das Quetschformwerkzeug 19 in eine zweite Stellung überführbar, die dann das Quetschformen bewirkt.

Beim Quetschformen wird der Rohrrohling 16 im Bereich der auszubildenden Kanäle 4, also im Bereich der Ausbuchtung 17 gequetscht. Die Quetschrichtung ist in Fig. 9 durch zwei aufeinander zu gerichtete Pfeile angedeutet. Durch das Quetschformen werden die Außenabmessungen des jeweiligen Kanals 4 - abgesehen von der jeweiligen Kanallänge 7 - hergestellt. Durch das Quetschformen erhalten Vertiefungen 20, die sich beim Blasformen im Bereich der jeweiligen Ausbuchtung 17 im Rohrrohling 16 ausgebildet haben, die Form eines Rohkanals 21, der zum Inneren 3 des Rohrs 1 bzw. des Rohrrohlings 16 offen ist und der an seinem vom Rohrinneren 3 entfernten Ende geschlossen ist. Der Quetschformvorgang wird durchgeführt, wenn sich der Rohrrohling 16 in einem noch nicht erstarrten Zustand befindet. Beispielsweise kann sich der Quetschformgang unmittelbar an den Blasformvorgang anschließen, so dass der Rohrrohling 16 noch zähflüssig ist. Ebenso kann das Blasformwerkzeug 19 entsprechend temperiert werden, um den Quetschvorgang zu ermöglichen. Desweiteren ist es grundsätzlich möglich, während des Quetschformvorgangs das Rohrinnere 3 mit einem Druck, vorzugsweise mit dem Blasformdruck, zu beaufschlagen.

In Fig. 9 ist das Quetschformen im Bereich eines der Kanäle 4 wiedergegeben, um die Ausbildung eines Rohkanals 21 zu erläutern. Zwischen benachbarten Kanälen 4, also im Bereich der Stege 10 quetscht das Quetschformwerkzeug 19 die in der Vertiefung 20 einander gegenüberliegenden Wandabschnitte direkt aneinander an, wodurch diese aufgrund des zähflüssigen Zustands miteinander verkleben bzw. sich chemisch aneinander binden.

Nach dem Quetschformvorgang wird ein Schneidvorgang durchgeführt. Entsprechend Fig. 10 ist hierzu die Vorrichtung 13 mit einem entsprechenden Schneidwerkzeug 22 ausgestattet, das im Beispiel aus zwei Teilen besteht, nämlich aus einem Widerlager 22a und aus einer Klinge 22b, die entsprechend einem Pfeil 24 relativ zum Widerlager 22a verstellbar ist. Mit der Klinge 22b wird beim Beschneiden des Rohrrohlings 16 im Bereich des jeweiligen Rohkanals 21 ein den jeweiligen Rohkanal 21 verschließender Endabschnitt 23 abgeschnitten. Dabei entsteht der beidseitig offene Kanal 4. Nach dem Schneidvorgang ist das Rohr 1 im wesentlichen fertiggestellt.

Der Schneidvorgang wird dabei in einem erstarrtem Zustand des Rohrohlings 16 durchgeführt. Im gezeigten Beispiel ersetzt das Schneidwerkzeug 22 das Quetschformwerkzeug 19, so dass der Rohrrohling 16 im Blasformwerkzeug 14 verbleiben kann. Es ist klar, dass bei einer anderen Ausführungsform das Schneidwerkzeug 22 in das Quetschformwerkzeug 19 bzw. in das Blasformwerkzeug 14 integriert sein kann. Desweiteren ist es bei einer anderen Ausführungsform möglich, ein vollständig separates Schneidwerkzeug 22 vorzusehen, in welches der Rohrrohling 16 einzulegen ist, um den Beschneidungsvorgang durchzuführen. Bei in das Quetschformwerkzeug 19 bzw. in das Blasformwerkzeug 14 integriertem Schneidwerkzeug 22 ist das Schneidwerkzeug 22 zumindest zwischen zwei Stellungen verstellbar ausgestaltet. Für den Blasformvorgang bzw. für den Quetschformvorgang ist das Schneidwerkzeug 22 in eine erste Stellung überführt, in der es den jeweiligen Formvorgang nicht behindert. Für den Schneidvorgang ist das Schneidwerkzeug 22 bzw. dessen Klinge 22b in die zweite Stellung überführt.

## Patentansprüche

1. Verfahren zum Herstellen eines Rohrs (1), das in seiner Wandung (2) zwischen seinen Enden wenigstens einen die Wandung (2) durchdringenden Kanal (4) aufweist,
- bei dem in einem Blasformwerkzeug (14) ein Rohrrohling (16) aus Kunststoff blasgeformt wird,
**dadurch gekennzeichnet,**
- **dass** das Blasformwerkzeug (14) für den jeweiligen Kanal (4) eine Ausbuchtung (17) aufweist, die der Rohrrohling (16) auskleidet und deren Innenabmessungen größer sind als die Außenabmessungen des jeweiligen Kanals (4),
- **dass** der Rohrrohling (16) in einem noch nicht erstarrten Zustand im Bereich der jeweiligen Ausbuchtung (17) mit einem Quetschformwerkzeug (19) gequetscht wird, derart, dass für jeden Kanal (4) ein mit dem Inneren (3) des Rohrs (1) kommunizierender Rohkanal (21) entsteht, der an seinem vom Rohrinneren (3) entfernten Ende geschlossen ist und der bis auf die jeweils gewünschte Kanallänge (7) die Außenabmessung des jeweiligen Kanals (4) aufweist,
- **dass** der gequetschte Rohrrohling (16) in einem erstarrten Zustand im Bereich des jeweiligen Rohkanals (21) mit einem Schneidwerkzeug (22) geschnitten wird, derart, dass anschließend der jeweilige Kanal (4) offen ist und die jeweils gewünschte Kanallänge (7) aufweist.

2. Verfahren nach Anspruch 1,
**dadurch gekennzeichnet,**
**dass** während des Quetschformvorgangs das Rohrinnere (3) mit einem Druck, insbesondere mit dem Blasformdruck, beaufschlagt wird.

3. Verfahren nach Anspruch 1 oder 2,
**dadurch gekennzeichnet,**
**dass** das Quetschformwerkzeug (19) in das Blasformwerkzeug (14) integriert ist, derart, dass das Quetschformwerkzeug (19) beim Blasformen eine erste Stellung einnimmt und beim Quetschformen in eine zweite Stellung überführt wird.

4. Verfahren nach einem der Ansprüche 1 bis 3,
**dadurch gekennzeichnet,**
**dass** das Schneidwerkzeug (22) in das Blasformwerkzeug (14) oder in das Quetschformwerkzeug (19) integriert ist, derart, dass das Schneidwerkzeug (22) beim Blasformen und/oder beim Quetschformen eine erste Stellung einnimmt und beim Schneiden in eine zweite Stellung überführt wird.

5. Vorrichtung zum Herstellen eines Rohrs (1), das in seiner Wandung (2) zwischen seinen Enden wenigstens einen die Wandung (2) durchdringenden Kanal (4) aufweist,
- mit einem Blasformwerkzeug (14), in dem ein Rohrrohling (16) aus Kunststoff blasformbar ist,
**dadurch gekennzeichnet,**
- **dass** das Blasformwerkzeug für den jeweiligen Kanal (4) eine Ausbuchtung (17) aufweist, die beim Blasformen durch den Rohrrohling (16) ausgekleidet ist und die Innenabmessungen aufweist, die größer sind als die Außenabmessungen des jeweiligen Kanals (4),
- **dass** ein Quetschformwerkzeug (19) vorgesehen ist, mit dem der Rohrrohling (16) in einem noch nicht erstarrten Zustand im Bereich der jeweiligen Ausbuchtung (17) quetschbar ist, derart, dass für jeden Kanal (4) ein mit dem Inneren (3) des Rohrs (1) kommunizierender Rohkanal (21) entsteht, der an seinem vom Rohrinneren (3) entfernten Ende geschlossen ist und der bis auf die jeweils gewünschte Kanallänge (7) die Außenabmessungen des jeweiligen Kanals (4) aufweist,
- **dass** ein Schneidwerkzeug (22) vorgesehen ist, mit dem der gequetschte Rohrrohling (16) in einem erstarrten Zustand im Bereich des jeweiligen Rohkanals (21) beschneidbar ist, derart, dass anschließend der jeweilige Kanal (4) offen ist und die jeweils gewünschte Kanallänge (7) aufweist.

6. Vorrichtung nach Anspruch 5,
**dadurch gekennzeichnet,**
**dass** das Quetschformwerkzeug (19) in das Blasformwerkzeug (14) integriert ist, derart, dass das Quetschformwerkzeug (19) für den Blasformvorgang in eine erste Stellung und für den Quetschformvorgang in eine zweite Stellung überführbar ist.

7. Vorrichtung nach Anspruch 5 oder 6,
**dadurch gekennzeichnet,**
**dass** das Schneidwerkzeug (22) in das Blasformwerkzeug (14) oder in das Quetschformwerkzeug (19) integriert ist, derart, dass das Schneidwerkzeug (22) für den Blasformvorgang und/oder für den Quetschformvorgang in eine erste Stellung und für den Schneidvorgang in eine zweite Stellung überführbar ist.

8. Rohr mit einer Wandung (2), die zwischen den Enden des Rohrs (1) wenigstens einen, die Wandung (2) durchdringenden Kanal (4) aufweist, wobei das Rohr (1) aus Kunststoff blasgeformt und im Bereich des jeweiligen Kanals (4) gequetscht und beschnitten ist,
**dadurch gekennzeichnet,**
**dass** das Rohr (1) mehrere Kanäle (4) aufweist, die in der Rohrlängsrichtung hintereinander angeordnet sind und sich quer zur Rohrlängsrichtung erstrecken und von Hülsenkörpern eingefasst sind, wobei benachbarte Hülsenkörper jeweils durch einen Steg verbunden sind, und wobei das Rohr einschließlich der Hülsenkörper und einschließlich der Stege aus einem Stück hergestellt sind.

9. Rohr nach Anspruch 8,
**dadurch gekennzeichnet,**
**dass** die Kanäle (4) zick-zack-förmig oder geradlinig hintereinander angeordnet sind.

10. Rohr nach Anspruch 8 oder 9,
**dadurch gekennzeichnet,**
**dass** das Rohr (1) mehrere Kanäle (4) aufweist, die sich hinsichtlich Kanalquerschnitt (6) und/oder Kanallänge (7) voneinander unterscheiden.

11. Verwendung eines Rohrs (1) nach einem der Ansprüche 8 bis 10 in einer Frischgasanlage zur Versorgung einer Brennkraftmaschine, insbesondere in einem Kraftfahrzeug, mit Frischgas und zur Bedämpfung eines Einlassgeräuschs der Brennkraftmaschine.

## Claims

1. A method for producing a pipe (1) having a wall (2), wherein said wall (2) between the ends of which has at least one channel (4) that passes through said wall (2),
- in which method a tube blank (16) composed of plastic is blow moulded in a blow-moulding tool (14),
**characterized in**
- **that** the blow-moulding tool (14) has a convexity (17) for each channel (4), which convexity (17) lines the tube blank (16) and its internal measurements are greater than the exterior measurements of each channel (4),
- **that** the tube blank (16) in a not-yet-solidified state is crushed in the region of the convexity (17) by a crush-moulding tool (19) in such a manner that for each channel (4) a rough channel (21) results that communicates with the interior (3) of the pipe (1), which rough channel (21) is closed on its end distant from the pipe interior (3) and has the exterior measurement of each channel (4) with the exception of the desired channel length (7),
- **that** the crushed tube blank (16) in a solidified state is cut in the region of each rough channel (21) with a cutting tool (22) in such a manner that subsequent thereto, the individual channel (4) is open and has the desired channel length (7).

2. The method as specified in claim 1,
**characterised in**
**that** during the crush-moulding process, the pipe interior (3) is impinged upon with pressure, in particular a blow-moulding pressure.

3. The method as specified in claim 1,
**characterised in**
**that** the crush-moulding tool (19) is integrated in the blow-moulding tool (14) in such a manner that the crush-moulding tool (19) assumes a first position during blow moulding and is conveyed into a second position during crush moulding.

4. The method as specified in any one of claims 1 to 3,
**characterised in**
**that** the cutting tool (22) is integrated in the blow-moulding tool (14) or in the crush-moulding tool (19) in such a manner that the cutting tool (22) assumes a first position during blow moulding and/or during crush moulding and is conveyed into a second position during cutting.

5. An apparatus for producing a pipe (1) having a wall (2), wherein said wall (2) between the ends of which has at least one channel (4) that passes through said wall (2),
- having a blow-moulding tool (14) in which a tube blank (16) composed of plastic can be blow moulded,
**characterized in**
- **that** the blow-moulding tool (14) has a convexity (17) for each channel (4), which convexity (17) is lined by the tube blank (16) and has internal measurements greater that are than the exterior measurements of each channel (4),
- **that** a crush-moulding tool (19) is provided with which the tube blank (16) in a not-yet-solidified state can be crushed in the region of the convexity (17) in such a manner that for each channel (4) a rough channel (21) results that communicates with the interior (3) of the pipe (1), which rough channel (21) is closed on its end distant from the pipe interior (3) and has the exterior measurement of the channel (4) in question with the exception of the channel length (7),
- **that** a cutting tool (22) is provided with which the crushed tube blank (16) in a solidified state can be cut in the region of each rough channel (21) in such a manner that subsequent thereto, the individual channel (4) is open and has the desired channel length (7).

6. The apparatus as specified in claim 5,
**characterised in that**
the crush-moulding tool (19) is integrated in the blow-moulding tool (14) in such a manner that the crush-moulding tool (19) can be conveyed into a first position for the blow-moulding process and can be conveyed into a second position for the crush-moulding process.

7. The apparatus as specified in claims 5 or 6,
**characterised in that**
the cutting tool (22) is integrated in the blow-moulding tool (14) or in the crush-moulding tool (19) in such a manner that the cutting tool (22) can be conveyed into a first position for the blow-moulding process and can be conveyed into a second position for the cutting process.

8. A pipe with a wall (2) that, between the ends of the pipe (1), has at least one channel (4) that passes through the wall (2), wherein the pipe (1) is blow moulded of plastic and is crushed and cut in the region of the channel (4) in question,
**characterised in**
**that** the pipe (1) has a plurality of channels (4) that in the longitudinal direction of the pipe are arranged one after the other, and extend crosswise to the longitudinal direction of the pipe, and are surrounded by sleeve bodies, wherein adjacent sleeve bodies are interconnected by means of a web, and wherein the pipe inclusively the sleeve bodies and inclusively the webs are manufactural integrally.

9. The pipe as specified in claim 8,
**Characterized in**
**that** the channels (4) are arranged one after the other in a zigzag or linear formation.

10. The pipe as specified in claim 8 or 9,
**characterised in**
**that** the pipe (1) has a plurality of channels (4) that differ from one another with respect to channel width (6) and/or channel length (7).

11. Use of a pipe (15) as specified in any one of claims 8 to 10 in a fresh gas system for supplying an internal combustion engine, in particular in a motor vehicle, with fresh gas for attenuating an intake noise of the internal combustion engine.

## Revendications

1. Procédé de fabrication d'un tube (1) qui présente dans sa paroi (2), entre ses extrémités, au moins un canal (4) traversant ladite paroi (2),
- dans lequel une ébauche de tube (16) est moulée par soufflage de matière plastique dans un outil de moulage par soufflage (14), **caractérisé par le fait**
- **que** ledit outil de moulage par soufflage (14) présente pour le canal respectif (4) une saillie (17) qui est revêtue de ladite ébauche de tube (16) et dont les dimensions intérieures sont supérieures aux dimensions extérieures du canal respectif (4),
- **que** ladite ébauche de tube (16) est serrée, dans un état non encore solidifié, au niveau de la saillie respective (17) au moyen d'un outil de façonnage par serrage (19) de manière à ce que, pour chaque canal (4), soit créé un canal brut (21) communiquant avec l'intérieur (3) du tube (1), qui est fermé à son extrémité éloignée de l'intérieur (3) du tube et qui, à l'exception de la longueur de canal (7) respectivement souhaitée, présente la dimension extérieure du canal respectif (4),
- **que** l'ébauche de tube (16) serrée est coupée, dans un état solidifié, au niveau du canal brut respectif (21) au moyen d'un outil de coupe (22) de manière à ce que, ci-après, le canal respectif (4) soit ouvert et présente la longueur de canal (7) respectivement souhaitée.

2. Procédé selon la revendication 1, **caractérisé par le fait que**, durant l'opération de façonnage par serrage, l'intérieur (3) du tube est soumis à une pression, en particulier à la pression de moulage par soufflage.

3. Procédé selon la revendication 1 ou 2, **caractérisé par le fait que** ledit outil de façonnage par serrage (19) est intégré à l'outil de moulage par soufflage (14) de manière à ce que ledit outil de façonnage par serrage (19) occupe une première position lors du moulage par soufflage et soit transféré dans une seconde position lors du façonnage par serrage.

4. Procédé selon l'une quelconque des revendications 1 à 3, **caractérisé par le fait que** ledit outil de coupe (22) est intégré à l'outil de moulage par soufflage (14) ou à l'outil de façonnage par serrage (19) de manière à ce que ledit outil de coupe (22) occupe une première position lors du moulage par soufflage et/ou lors du façonnage par serrage et soit transféré dans une seconde position lors de la coupe.

5. Dispositif de fabrication d'un tube (1) qui présente dans sa paroi (2), entre ses extrémités, au moins un canal (4) traversant ladite paroi (2),
- comprenant un outil de moulage par soufflage (14) dans lequel une ébauche de tube (16) peut être moulée par soufflage de matière plastique, **caractérisé par le fait**
- **que** ledit outil de moulage par soufflage présente pour le canal respectif (4) une saillie (17) qui, lors du moulage par soufflage, est revêtue de ladite ébauche de tube (16) et qui présente des dimensions intérieures lesquelles sont supérieures aux dimensions extérieures du canal respectif (4),
- **qu'**un outil de façonnage par serrage (19) est prévu au moyen duquel ladite ébauche de tube (16) peut être serrée, dans un état non encore solidifié, au niveau de la saillie respective (17) de manière à ce que, pour chaque canal (4), soit créé un canal brut (21) communiquant avec l'intérieur (3) du tube (1), qui est fermé à son extrémité éloignée de l'intérieur (3) du tube et qui, à l'exception de la longueur de canal (7) respectivement souhaitée, présente les dimensions extérieures du canal respectif (4),
- **qu'**un outil de coupe (22) est prévu au moyen duquel l'ébauche de tube (16) serrée peut être coupée, dans un état solidifié, au niveau du canal brut respectif (21) de manière à ce que, ci-après, le canal respectif (4) soit ouvert et présente la longueur de canal (7) respectivement souhaitée.

6. Dispositif selon la revendication 5, **caractérisé par le fait que** ledit outil de façonnage par serrage (19) est intégré à l'outil de moulage par soufflage (14) de manière à ce que ledit outil de façonnage par serrage (19) puisse être transféré dans une première position pour l'opération de moulage par soufflage et dans une seconde position pour l'opération de façonnage par serrage.

7. Dispositif selon la revendication 5 ou 6, **caractérisé par le fait que** ledit outil de coupe (22) est intégré à l'outil de moulage par soufflage (14) ou à l'outil de façonnage par serrage (19) de manière à ce que ledit outil de coupe (22) puisse être transféré dans une première position pour l'opération de moulage par soufflage et/ou pour l'opération de façonnage par serrage et dans une seconde position pour l'opération de coupe.

8. Tube ayant une paroi (2) qui présente, entre les extrémités du tube (1), au moins un canal (4) traversant ladite paroi (2), ledit tube (1) étant moulé par soufflage de matière plastique et étant serré et coupé au niveau du canal respectif (4), **caractérisé par le fait que** le tube (1) présente plusieurs canaux (4) qui sont agencés les uns derrière les autres dans la direction longitudinale du tube et s'étendent transversalement à la direction longitudinale du tube et qui sont bordés de corps en douille, des corps en douille voisins étant reliés entre eux respectivement par une entretoise, et le tube y compris lesdits corps en douille et y compris lesdites entretoises étant réalisés en une seule pièce.

9. Tube selon la revendication 8, **caractérisé par le fait que** lesdits canaux (4) sont disposés en zigzag ou de façon rectiligne les uns derrière les autres.

10. Tube selon la revendication 8 ou 9, **caractérisé par le fait que** ledit tube (1) présente plusieurs canaux (4) qui se distinguent les uns des autres quant à la section de canal (6) et/ou à la longueur de canal (7).

11. Mise en ouvre d'un tube (1) selon l'une quelconque des revendications 8 à 10, dans une installation de gaz frais pour l'alimentation en gaz frais d'un moteur à combustion interne, en particulier dans un véhicule automobile, et pour l'amortissement d'un bruit d'admission du moteur à combustion interne.
